Europäisches Patentamt

European Patent Office

Office européen des brevets

(19)

(11) Numéro de publication : **0 185 226**
**B1**

(12) **FASCICULE DE BREVET EUROPÉEN**

(45) Date de publication du fascicule du brevet :
26.04.89

(21) Numéro de dépôt : 85114951.8

(22) Date de dépôt : 26.11.85

(51) Int. Cl.⁴ : **H 01 S 3/03**, H 01 S 3/097,
H 01 S 3/045

(54) Générateur laser à flux gazeux et procédé de fonctionnement de ce générateur.

(30) Priorité : 29.11.84 FR 8418183

(43) Date de publication de la demande :
25.06.86 Bulletin 86/26

(45) Mention de la délivrance du brevet :
26.04.89 Bulletin 89/17

(84) Etats contractants désignés :
BE CH DE FR GB IT LI NL SE

(56) Documents cités :
FR–A– 2 384 348
US–A– 3 671 883
PATENTS ABSTRACTS OF JAPAN, vol. 8, no. 13 (E-222) [1450], 20 janvier 1984, page 148 E 222; & JP - A - 58 178 579
PATENTS ABSTRACTS OF JAPAN, vol. 8, no. 21 (E-224) [1458], 28 janvier 1984, page 68 E 224; & JP - A - 58 182 888

(73) Titulaire : **COMPAGNIE GENERALE D'ELECTRICITE**
**Société anonyme dite:**
**54, rue La Boétie**
**F-75382 Paris Cédex 08 (FR)**

(72) Inventeur : **Brunet, Henri**
**26, rue Hache**
**F-94240 L'Hay Les Roses (FR)**
Inventeur : **Mabru, Michel**
**1, Boulevard Pasteur**
**F-91440 Bures Sur Yvette (FR)**
Inventeur : **Gastaud, Michel**
**24, rue Henri Barbusse**
**F-91700 Saint Genevieve des Bois (FR)**

(74) Mandataire : **Weinmiller, Jürgen et al**
**Lennéstrasse 9 Postfach 24**
**D-8133 Feldafing (DE)**

**Description**

La présente invention concerne un générateur laser à flux gazeux et un procédé de fonctionnement de ce générateur. Ce générateur laser à flux gazeux est d'un type comportant

— des moyens pour créer une cavité optique résonnante suivant un axe,

— un tube à décharge disposé dans la cavité suivant ledit axe,

— des moyens d'introduction d'un gaz laser dans le tube,

— des moyens d'aspiration du gaz laser hors du tube,

— une première et une deuxième électrodes comportant chacune une ouverte centrale, ces électrodes étant disposées suivant ledit axe de façon qu'elles soient en contact avec le gaz laser introduit dans le tube,

— des moyens pour porter les première et deuxième électrodes respectivement à deux potentiels électriques différents, de façon à créer entre ces électrodes une décharge électrique dans le gaz laser contenu dans le tube, cette décharge provoquant la formation d'un rayonnement laser axial oscillant dans la cavité et traversant les ouvertures centrales des première et deuxième électrodes

— et des moyens pour faire sortir de la cavité une partie du rayonnement laser afin de former un faisceau laser.

Un générateur laser de ce type est décrit dans la demande de brevet européen publiée sous le numéro 0 015 297. Dans ce générateur, le gaz laser est introduit axialement dans le tube à travers l'ouverture centrale de la première électrode et à travers des ouvertures périphériques de cette électrode. Ce générateur laser présente un inconvénient : la puissance spécifique de décharge de ces générateurs, c'est-à-dire la puissance électrique maximale qu'il est possible de développer dans la décharge électrique, divisée par le volume de décharge, est limitée à une valeur relativement faible. Il en résulte une limitation correspondante de la puissance de sortie de ces générateurs laser.

La présente invention a pour but de pallier cet inconvénient et de réaliser des générateurs laser à flux gazeux particulièrement simples, de grande puissance et de rendement élevé.

La présente invention a pour objet un générateur laser à flux gazeux, du type mentionné ci-dessus, caractérisé en ce que lesdits moyens d'introduction du gaz laser dans le tube comportent des canaux d'injection de gaz disposés dans la première électrode, les axes d'injection de ces canaux coupant l'axe de la cavité, étant orientés vers la deuxième électrode et étant inclinés par rapport à l'axe de la cavité d'un angle sensiblement égal à 45 degrés, le nombre et la section des canaux étant choisis pour que l'injection du gaz laser dans le tube puisse s'effectuer à une vitesse au moins égale à celle du son.

Dans ce générateur laser, lesdits moyens d'introduction du gaz laser dans le tube peuvent comporter en outre une chambre disposée dans la première électrode, cette chambre pouvant être reliée à une source de gaz laser et être en communication par lesdits canaux d'injection avec le volume intérieur du tube à décharge. De plus, ce générateur laser peut comporter en outre des moyens pour faire circuler un liquide de refroidissement dans la première électrode.

Dans un mode de réalisation avantageux, ce générateur laser comporte en outre

— une troisième électrode identique à la deuxième électrode et en contact avec le gaz laser introduit dans le tube, la deuxième et la troisième électrodes étant disposées dans une partie médiane du tube,

— une quatrième électrode analogue à la première électrode et en contact avec le gaz laser introduit dans le tube, la première et la quatrième électrodes étant disposées respectivement dans les deux parties extrêmes du tube, les axes d'injection des canaux de la quatrième électrode étant orientés vers la partie médiane du tube,

— que lesdits moyens pour porter les première et deuxième électrodes respectivement à deux potentiels électriques différents sont capables de porter la troisième électrode au même potentiel que celui de la deuxième électrode, et de porter la quatrième électrode au même potentiel que celui de la première électrode

— et que les moyens d'aspiration du gaz laser hors du tube comportent une pompe dont l'entrée est reliée par une première canalisation à une ouverture du tube située entre les deuxième et troisième électrodes, la sortie de la pompe étant reliée par une deuxième et troisième canalisations respectivement à la première et à la quatrième électrodes pour alimenter leurs canaux d'injection en gaz laser.

Dans ce mode de réalisation, deux échangeurs thermiques peuvent être disposés respectivement sur les deuxième et troisième canalisations.

La présente invention a aussi pour objet un procédé de fonctionnement de ce générateur laser consistant à maintenir à l'amont desdits canaux d'injection une pression de gaz laser supérieure d'au moins cinquante pour cent à la pression de gaz laser dans le tube, deux potentiels électriques différents étant appliqués respectivement sur les première et deuxième électrodes, de façon à créer entre ces électrodes une décharge électrique dans le gaz laser injecté dans le tube.

Plusieurs formes particulières d'exécution de l'objet de la présente invention sont décrites ci-dessous, à titre d'exemple, en référence aux dessins annexés dans lesquels

— la figure 1 représente schématiquement en coupe longitudinale un mode de réalisation possible du générateur laser selon l'invention,

— la figure 2 est une vue montrant, en coupe suivant un plan axial, une variante d'une électrode d'injection du générateur laser selon l'invention, et l'adaptation de cette électrode à un tube laser de petit diamètre,

— la figure 3 montre, en vue de face, l'électrode d'injection illustrée par la figure 2,

— la figure 4 est une vue montrant, en coupe suivant un plan axial, une autre variante d'une électrode d'injection du générateur laser selon l'invention, et l'adaptation de cette électrode à un tube laser de grand diamètre

— et la figure 5 représente schématiquement en coupe longitudinale, un mode de réalisation préféré du générateur laser selon l'invention.

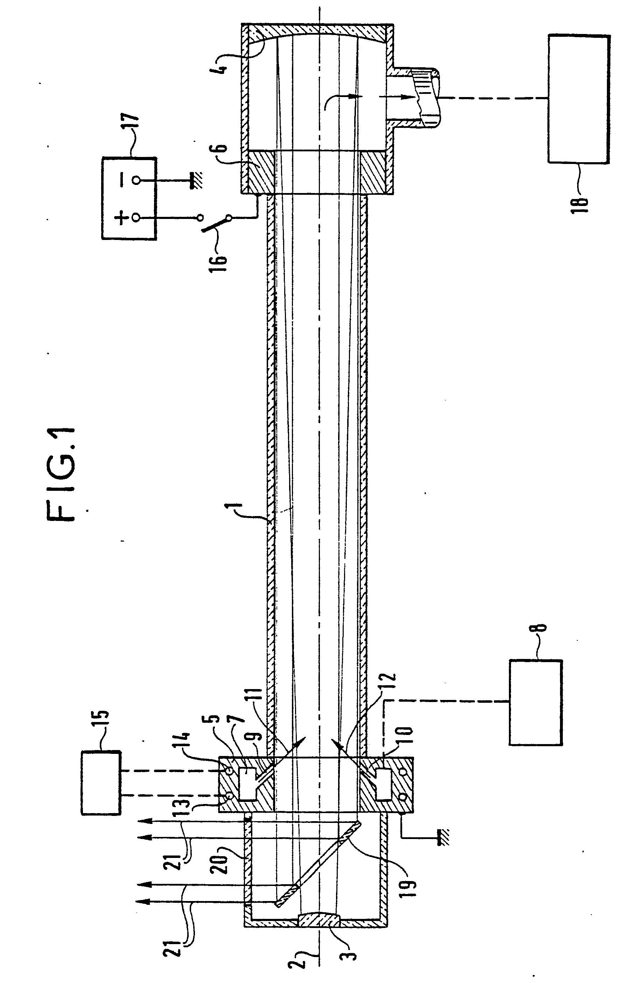

Sur la figure 1 est représenté un tube isolant 1 de forme générale cylindrique autour d'un axe 2. Le tube 1 est fermé à ses deux extrémités respectivement par un miroir convexe 3 et un miroir concave 4. Les faces réfléchissantes de ces deux miroirs sont en regard l'une de l'autre de manière à former une cavité optique résonnante instable d'axe 2.

Dans les deux parties extrêmes du tube 1 sont encastrées deux électrodes annulaires 5 et 6 centrées sur l'axe 2. Ces électrodes peuvent être réalisées en cuivre, en nickel ou en un autre métal conducteur.

L'électrode 5 comporte une chambre interne annulaire 7 qui peut être reliée par une canalisation à une source 8 de gaz laser. Ce gaz peut être par exemple un mélange de gaz carbonique, d'azote et d'hélium. De la chambre 7 partent des canaux d'injection de gaz, tels que 9 et 10, débouchant sur la surface cylindrique intérieure de l'électrode 5. Ces canaux définissent des axes d'injection tels que 11 et 12 orientés vers l'électrode 6 et inclinés par rapport à l'axe 2 de la cavité d'un angle sensiblement égal à 45 degrés. L'électrode 5 comporte également des canaux internes 13 et 14 connectés à un système de circulation de fluide 15. L'électrode 6, qui peut être constituée par un simple anneau métallique, sans chambre interne ni canaux, est connectée électriquement à travers un interrupteur 16 au pôle positif d'un générateur électrique 17 à haute tension. Le pôle négatif du générateur 17 ainsi que l'électrode 5 sont connectés à la masse de l'installation. Le tube 1 comporte sur sa surface cylindrique extérieure, entre l'électrode 6 et le miroir 4, une ouverture reliée par une canalisation non représentée à un système de pompage 18. Un réflecteur plan annulaire 19 est placé dans le tube 1 entre l'électrode 5 et le miroir 3. Le réflecteur 19 est disposé suivant l'axe 2 et incliné à 45 degrés sur cet axe. Une fenêtre 20 est encastrée dans la paroi cylindrique extérieure du tube 1 entre l'électrode 5 et le miroir 3 pour laisser sortir du tube un faisceau lumineux renvoyé par le réflecteur 19.

Le générateur laser décrit ci-dessus et illustré par la figure 1 fonctionne de la manière suivante.

La source 8 est reliée à la chambre 7 pour l'alimenter en gaz laser, celui-ci étant injecté dans le tube 1 par les canaux 9 et 10 suivant les axes d'injection 11 et 12. Par ailleurs le système de pompage 18 permet d'aspirer hors du tube 1 le gaz laser injecté. Le nombre et la section des canaux 9, 10 est choisi de manière que l'injection du gaz dans le tube puisse s'effectuer à une vitesse au moins égale à la vitesse du son. Pour cela, il est nécessaire que la pression du gaz laser dans la chambre 7, à l'amont des canaux d'injection soit supérieure d'au moins cinquante pour cent à la pression du gaz laser régnant dans le tube 1. Dans le fonctionnement du laser selon l'art antérieur cité plus haut, le rapport de pression gazeuse entre l'amont et l'aval de la cathode est de l'ordre de 1,15.

Après fermeture de l'interrupteur 16, l'électrode 6 est portée à un potentiel élevé par rapport à l'électrode 5, ce qui provoque une décharge électrique entre les deux électrodes dans le gaz laser circulant dans le tube 1. Il en résulte la formation d'un rayonnement laser oscillant dans la cavité optique résonnante, entre les miroirs 3 et 4, dans un volume cylindrique d'axe 2 traversant les ouvertures centrales des électrodes annulaires 5 et 6, le diamètre de ce volume correspondant au diamètre intérieur des électrodes. Une partie de l'énergie de ce rayonnement est prélevée par le réflecteur annulaire 19 dont la section intérieure est suffisante pour laisser passer le rayonnement oscillant entre les miroirs 3 et 4 ; le miroir 3 a un diamètre extérieur plus faible que celui du miroir 4 comme il apparaît sur la figure. Le faisceau du rayonnement laser prélevé par le miroir 19 sort du tube en traversant la fenêtre 20 pour former un faisceau laser annulaire 21. Le système 15 permet de faire circuler dans les canaux 13 et 14 un fluide de refroidissement tel que l'eau.

L'inclinaison à 45° des axes d'injection par rapport à l'axe du tube et la vitesse supersonique d'injection du gaz provoquent dans le tube un écoulement rapide de gaz, en régime turbulent. Il en résulte une décharge électrique homogène qui peut s'effectuer à une pression gazeuse nettement plus élevée que celle du laser selon l'art antérieur.

Grâce à son écoulement rapide, l'échauffement du gaz laser dans le tube est réduit. Le refroidissement, par circulation d'eau, de l'électrode d'injection du gaz évite la formation d'arcs dans la décharge électrique et augmente la durée de vie de cette électrode. Les deux miroirs de la cavité optique résonnante sont situés en dehors de la zone de décharge électrique, ce qui augmente la durée de vie de ces miroirs.

Le générateur laser selon l'invention permet d'obtenir des décharges électriques de puissance spécifique élevée. Des puissances spécifiques environ trois fois plus élevées que dans l'art antérieur ont été obtenues en utilisant un tube à décharge de 50 mm de diamètre. Il est possible ainsi de réaliser des générateurs laser de grande puissance de sortie ou délivrant des puissances de sortie égales à celles des générateurs selon l'art antérieur, avec un encombrement réduit.

Le tableau ci-dessous donne, à titre indicatif, des valeurs numériques illustrant le fonctionnement de quatre générateurs laser selon l'invention, utilisant un mélange contenant de l'azote, 4 à 6 % de gaz carbonique et 50 % d'hélium. On peut constater sur ce tableau que le rapport entre la pression Po du gaz laser en amont des canaux d'injection, mesurée par exemple dans la chambre 7, et la pression P1 de ce gaz dans la zone de décharge électrique tend à augmenter avec le diamètre du tube à décharge, tandis que la puissance spécifique de décharge est d'autant plus grande que le diamètre du tube à décharge est faible.

| Tube à décharge | | | Canaux | d'injection | Rapport | Puissance spécifique |
|---|---|---|---|---|---|---|
| Diamètre | Pression P1 | Débit gazeux | Nombre | Diamètre | Po/P1 | |
| mm | Torrs | moles/s | | mm | | $W/cm^3$ |
| 22 | 80 | 0,2 | 12 | 3,1 | 1,8 | $> 10$ |
| 50 | 40 | 0,8 | 12 | 8 | 2,2 | 5 |
| 75 | 40 | 1,4 | 12 | 8,5 | 4 | 3 |
| 100 | 40 | 2,8 | 24 | 8,4 | 4 | 2,5 |

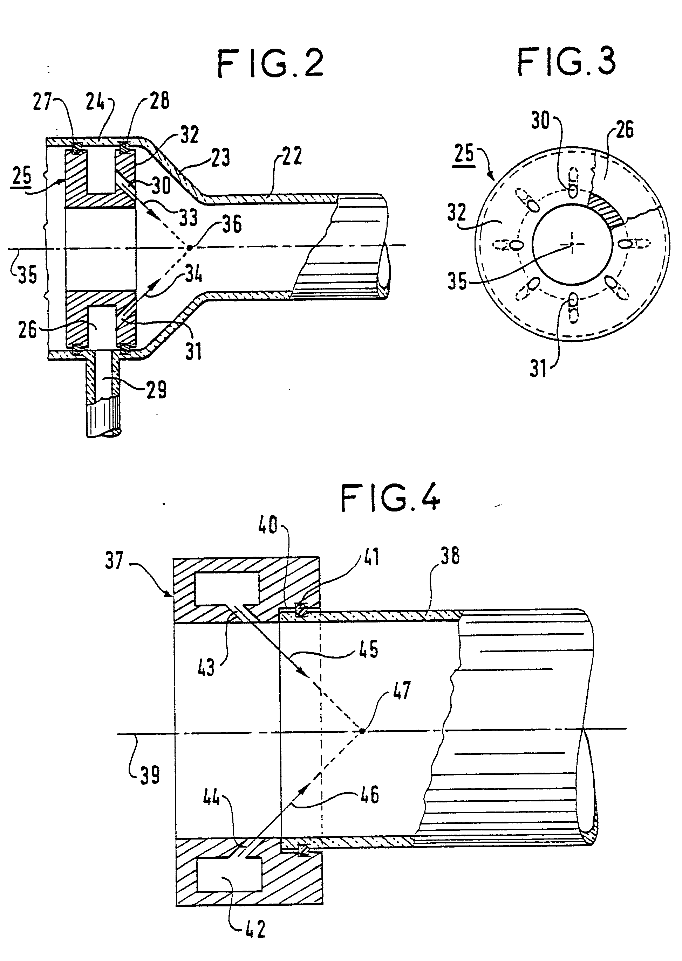

La figure 2 est une vue partielle en coupe axiale d'un tube laser d'axe 35 comprenant un tube à décharge 22 de petit diamètre, raccordé par un élément conique 23 à un embout cylindrique 24 dont le diamètre est supérieur à celui du tube 22. L'électrode d'injection 25 est disposée coaxialement à l'intérieur de l'embout 24. La chambre d'injection 26 de cette électrode est cylindrique de révolution autour de l'axe 35 et ouverte sur la surface cylindrique extérieure de l'électrode. Deux joints toriques 27 et 28 sont disposés entre la surface cylindrique extérieure de l'électrode 25 et la surface cylindrique intérieure de l'embout 24, de façon à assurer l'étanchéité de la chambre 26. L'embout 24 comporte une ouverture 29 pour alimenter la chambre 26 en gaz laser. Huit canaux d'injection tels que 30 et 31 partent de la chambre 26 et traversent la paroi plane 32 de l'électrode 25, située du côté du tube à décharge 22. Ces canaux définissent des axes d'injection 33 et 34 inclinés à 45° sur l'axe 35 du tube laser et orientés vers l'autre électrode située à l'extrémité non représentée du tube 22. Bien entendu, un conducteur électrique, non représenté, fixé sur l'électrode 25, traverse l'embout 24 de façon étanche afin d'appliquer à cette électrode le potentiel électrique convenable pour déclencher la décharge électrique.

La figure 3 représente l'électrode 25 vue de face du côté du tube 22. Cette figure montre que les huit canaux d'injection sont répartis régulièrement autour de l'axe 35. Les différents axes d'injection sont placés sur un cône de sommet 36 situé sur l'axe 35, de révolution autour de cet axe. Le bord interrompu de l'embout 24 se prolonge vers un miroir de la cavité, comme représenté sur la figure 1.

La figure 4 représente une électrode d'injection 37 associée à un tube à décharge 38 de diamètre relativement grand, le tube 38 et l'électrode 37 étant coaxiaux suivant un axe 39. L'électrode 37, de forme générale annulaire comporte un épaulement cylindrique 40 dans lequel vient se loger l'extrémité du tube 38, l'étanchéité étant assurée par un joint torique 41. L'électrode 37 comporte une chambre intérieure annulaire 42 qui peut être mise en communication par une ouverture, non visible sur la figure, avec une source de gaz laser. Des canaux d'injection tels 43 et 44 partent de la chambre 42 pour venir déboucher sur la surface cylindrique intérieure de l'électrode 37. Ces canaux définissent des axes d'injection 45 et 46 inclinés à 45° sur l'axe 39. Les différents axes d'injection sont uniformément répartis autour de l'axe 39 et placés sur un cône de sommet 47 situé sur l'axe 39, de révolution autour de cet axe. Un tube non représenté supportant un miroir de la cavité laser peut être raccordé à l'électrode 37 par exemple par l'intermédiaire d'un autre joint torique, l'extrémité de ce tube se logeant dans un autre épaulement de l'électrode 37, du côté opposé à l'épaulement 40.

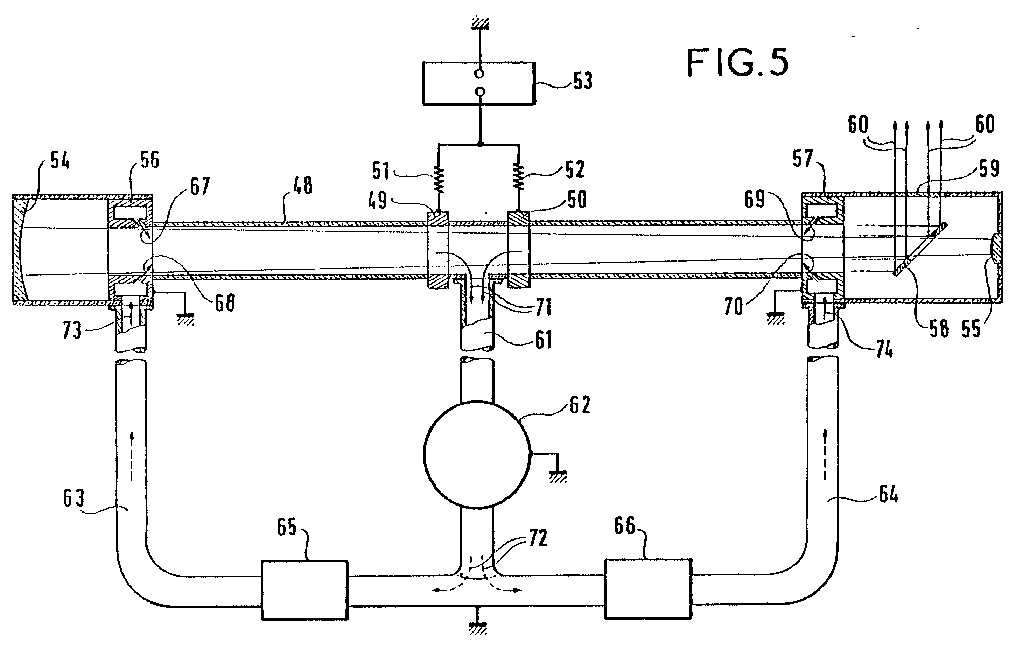

Le générateur laser représenté sur la figure 5 comporte un tube à décharge isolant de grande longueur 48. Dans la partie médiane de ce tube, sont fixées deux électrodes annulaires coaxiales 49 et 50 connectées électriquement à travers des résistances 51 et 52 au pôle positif d'un générateur électrique haute tension 53 dont le pôle négatif est relié à la masse de l'installation. Aux deux extrémités du tube 48 sont fixés respectivement deux miroirs concaves et convexes 54 et 55, analogues aux miroirs 4 et 3 de la figure 1, formant une cavité optique résonnante instable suivant l'axe du tube 48. A proximité des miroirs 54 et 55 sont fixées sur le tube respectivement deux électrodes d'injection de gaz 56 et 57, analogues à l'électrode 5 de la figure 1, les axes d'injection des électrodes 56 et 57 étant orientés vers la partie médiane du tube. Les électrodes 56 et 57 sont reliées à la masse de l'installation. Un miroir annulaire 58 incliné à 45 degrés sur l'axe du tube, et disposé dans la cavité entre l'électrode 57 et le miroir 55, permet

EP 0 185 226 B1

de renvoyer à l'extérieur de la cavité, à travers une fenêtre 59 du tube, une partie du rayonnement oscillant dans la cavité pour former un faisceau laser annulaire 60. Une canalisation isolante 61 est raccordée d'une part à une ouverture située dans la partie médiane du tube 48 entre les électrodes 49 et 50, et d'autre part à l'entrée d'une pompe à vide 62. De la sortie de la pompe 62, partent deux canalisations 63 et 64 raccordées respectivement aux électrodes 56 et 57. Deux échangeurs thermiques 65 et 66 sont disposés respectivement sur les canalisations 63 et 64. Les canalisations 63 et 64 peuvent être métalliques et reliées, ainsi que la pompe 22, à la masse de l'installation.

Pour faire fonctionner le générateur laser illustré par la figure 5, on fait le vide dans le circuit de circulation de gaz puis on fait pénétrer dans ce circuit un gaz actif laser tel qu'un mélange de gaz carbonique, d'azote et d'hélium. On met ensuite en marche la pompe 62 de façon à faire circuler le gaz laser dans le circuit suivant les flèches 71 à 74 et à injecter le gaz actif laser à une vitesse supersonique dans le tube 48 vers sa partie médiane, à travers les électrodes 56 et 57, suivant les axes d'injection tels que 67 et 68 de l'électrode 56, et 69 et 70 de l'électrode 57. On met sous tension les électrodes 49 et 50, de façon à provoquer la formation de deux décharges électriques simultanées dans le tube 48, d'une part entre les électrodes 56 et 49 et d'autre part entre les électrodes 57 et 50. Il en résulte la formation d'un rayonnement laser oscillant entre les miroirs 54 et 55 de la cavité, le miroir 58 permettant de prélever une partie de l'énergie de ce rayonnement pour former un faisceau laser 60 sortant du tube par la fenêtre 59.

Ce mode de réalisation est particulièrement avantageux lorsqu'on désire utiliser une cavité instable avec un gain supérieur à 1. A titre indicatif, un laser à gaz carbonique de ce type muni d'un tube à décharge de diamètre 5 cm et de longueur utile totale de 160 cm peut délivrer une puissance laser supérieure à 2,5 kW.

Les générateurs laser à gaz selon l'invention peuvent être utilisés pour réaliser des appareils de soudure, de découpe ou de traitement thermique.

**Revendications**

1. Générateur laser à flux gazeux, comportant
— des moyens pour créer une cavité optique résonnante suivant un axe,
— un tube à décharge disposé dans la cavité suivant ledit axe,
— des moyens d'introduction d'un gaz laser dans le tube,
— des moyens d'aspiration du gaz laser hors du tube,
— une première et une deuxième électrodes comportant chacune une ouverture centrale, ces électrodes étant disposées suivant ledit axe de façon qu'elles soient en contact avec le gaz laser introduit dans le tube,
— des moyens pour porter les première et deuxième électrodes respectivement à deux potentiels électriques différents, de façon à créer entre ces électrodes une décharge électrique dans le gaz laser contenu dans le tube, cette décharge provoquant la formation d'un rayonnement laser axial oscillant dans la cavité et traversant les ouvertures centrales des première et deuxième électrodes,
— et des moyens pour faire sortir de la cavité une partie du rayonnement laser afin de former un faisceau laser, caractérisé en ce que lesdits moyens d'introduction du gaz laser dans le tube comportent des canaux (9, 10) d'injection de gaz disposés dans la première électrode (5), les axes d'injection (11, 12) de ces canaux coupant l'axe de la cavité, étant orientés vers la deuxième électrode (6) et étant inclinés par rapport à l'axe (2) de la cavité d'un angle sensiblement égal à 45 degrés, le nombre et la section des canaux (9, 10) étant choisis pour que l'injection du gaz laser dans le tube (1) puisse s'effectuer à une vitesse au moins égale à celle du son.

2. Générateur laser selon la revendication 1, caractérisé en ce que lesdits moyens d'introduction du gaz laser dans le tube comportent en outre une chambre (7) disposée dans la première électrode (5), cette chambre pouvant être reliée à une source (8) de gaz laser et étant en communication par lesdits canaux (9, 10) d'injection avec le volume intérieur du tube à décharge (1).

3. Générateur laser selon la revendication 1, caractérisé en ce qu'il comporte en outre des moyens (13, 14, 15) pour faire circuler un liquide de refroidissement dans la première électrode (5).

4. Générateur laser selon la revendication 1, caractérisé en ce qu'il comporte en outre
— une troisième électrode (50) identique à la deuxième électrode (49) et en contact avec le gaz laser introduit dans le tube (48), la deuxième et la troisième électrodes (49, 50) étant disposées dans une partie médiane du tube (48),
— une quatrième électrode (57) analogue à la première électrode (56) et en contact avec le gaz laser introduit dans le tube, la première et la quatrième électrodes (56, 57) étant disposées respectivement dans les deux parties extrêmes du tube (48), les axes d'injection (69, 70) des canaux de la quatrième électrode (57) étant orientés vers la partie médiane du tube (48),
— que lesdits moyens pour porter les première et deuxième électrodes respectivement à deux potentiels électriques différents sont capables de porter la troisième électrode (50) au même potentiel que celui de la deuxième électrode (49), et de porter la quatrième électrode (57) au même potentiel que celui de la première électrode (56),
— et que les moyens d'aspiration du gaz laser hors du tube comportent une pompe (62) dont l'entrée

5

est reliée par une première canalisation (61) à une ouverture du tube (48) située entre les deuxième et troisième électrodes (49, 50), la sortie de la pompe (62) étant reliée par une deuxième et troisième canalisations (63, 64) respectivement à la première et à la quatrième électrodes (56, 57) pour alimenter leurs canaux d'injection en gaz laser.

5. Générateur laser selon la revendication 4, caractérisé en ce qu'il comporte en outre deux échangeurs thermiques (65, 66) disposés respectivement sur les deuxième et troisième canalisations (63, 64).

6. Procédé de fonctionnement du générateur laser selon la revendication 1, caractérisé en ce qu'il consiste à maintenir à l'amont desdits canaux d'injection (9, 10) une pression de gaz laser supérieure d'au moins cinquante pour cent à la pression de gaz laser dans le tube (1), deux potentiels électriques différents étant appliqués respectivement sur les première et deuxième électrodes (5, 6), de façon à créer entre ces électrodes une décharge électrique dans le gaz laser injecté dans le tube (1).

## Claims

1. A gas flow laser generator of a type comprising :
— means for creating a resonant optical cavity along an axis,
— a discharge tube arranged in the cavity along said axis,
— means for introducing a laser gas into the tube,
— means for sucking the laser gas out of the tube,
— a first and a second electrode each comprising a central opening, these electrodes being disposed along said axis such as to be in contact with the laser gas introduced into the tube,
— means for imparting two different electric potentials respectively to the first and second electrodes such as to bring about between these electrodes an electric discharge in the laser gas contained in the tube, this discharge bringing about the formation of an axial laser radiation oscillating within the cavity and passing through the central openings of the first and second electrodes,
— and means enabling part of the laser radiation to leave the cavity in order to form a laser beam, characterized in that said means for introducing the laser gas into the tube include gas injection channels (9, 10) arranged in the first electrode (5), the inlet axes (11, 12) of these channels intersecting the axis of the cavity, being directed towards the second electrode (6) and being inclined at an angle of substantially 45° in relation to the axis (2) of the cavity, the number and the cross-section of the channels (9, 10) being chosen such that the laser gas can be injected into the tube (1) at a speed at least equal to the speed of sound.

2. A laser generator according to claim 1, characterized in that said means for injecting the laser gas into the tube further include a chamber (7) provided in the first electrode (5), which chamber can be connected to a source (8) of laser gas and can communicate with the internal volume of the discharge tube (1) via said injection channels (9, 10).

3. A laser generator according to claim 1, characterized in that it further comprises means (13, 14, 15) for circulating a liquid coolant in the first electrode (5).

4. A laser generator according to claim 1, characterized in that it further comprises :
— a third electrode (50) identical to the second electrode (49) and placed in contact with the laser gas introduced into the tube (48), the second and the third electrodes (49, 50) being disposed in a central portion of the tube (48),
— a fourth electrode (57) similar to the first electrode (56) and placed in contact with the laser gas introduced into the tube, the first and the fourth electrodes (56, 57) being disposed respectively in the two end portions of the tube (48), the injection axes (69, 70) of the channels of the fourth electrode (57) being directed toward the central portion of the tube (48),
— that said means for imparting two different electric potentials to the first and second electrodes respectively are also able to bring the third electrode (50) to the same potential as the second electrode (49) and the fourth electrode (57) to the same potential as the first electrode (56),
— and that the means for sucking the laser gas out of the tube comprises a pump (62) whose inlet is connected via a first duct (61) to an opening of the tube (48) located between the second and the third electrode (49, 50), the outlet of the pump (62) being connected via a second and a third duct (63, 64) to the first and the fourth electrodes (56, 57) respectively in order to supply laser gas to their gas injection channels.

5. A laser generator according to claim 4, characterized in that it further includes two heat exchangers (65, 66) respectively disposed on the second and the third duct (63, 64).

6. A method of operating the laser generator according to claim 1, characterized in that it consists in maintaining upstream from said injection channels (9, 10) a laser gas pressure at least fifty percent higher than the laser gas pressure in the tube (1), two different electric potentials being respectively applied to the first and second electrodes (5, 6) so as to bring about an electric discharge between these electrodes in the laser gas injected into the tube (1).

# EP 0 185 226 B1

**Patentansprüche**

1. Gasdurchfluß-Lasergenerator mit
— Mitteln, um entlang einer Achse einen optischen Resonanzhohlraum zu erzeugen,
— einem Entladungsrohr, das im Hohlraum entlang der Achse angeordnet ist,
— Mitteln, um ein Lasergas in das Rohr einzuführen,
— Mitteln zum Heraussaugen des Lasergases aus dem Rohr,
— einer ersten und einer zweiten Elektrode, die je eine zentrale Öffnung aufweisen, wobei diese Elektroden zur Achse so ausgerichtet sind, daß sie mit dem in das Rohr eingeführten Gas in Verbindung stehen,
— Mitteln, um die erste und die zweite Elektrode auf zwei unterschiedliche elektrische Potentiale zu bringen, um zwischen diesen Elektroden eine elektrische Entladung im im Rohr enthaltenen Lasergas zu erzeugen, wobei diese Entladung die Bildung einer axialen Laserstrahlung erzeugt, die im Hohlraum schwingt und die zentralen Öffnungen der ersten und der zweiten Elektrode durchquert,
— und mit Mitteln, um einen Teil der Laserstrahlung aus dem Hohlraum heraustreten zu lassen, um einen Laserstrahl zu bilden, dadurch gekennzeichnet, daß die Mittel zur Einführung des Lasergases in das Rohr in der ersten Elektrode (5) angeordnete Gaseinspeise-Kanäle (9, 10) aufweisen, wobei die Einspeiseachsen (11, 12) dieser Kanäle die Achse des Hohlraums schneiden, zur zweiten Elektrode (6) hin ausgerichtet sind und in Bezug auf die Achse (2) des Hohlraums um einen Winkel von im wesentlichen 45° geneigt sind, wobei die Anzahl und der Querschnitt dieser Kanäle (9, 10) so gewählt sind, daß das Einspeisen des Lasergases in das Rohr (1) mit einer Geschwindigkeit erfolgen kann, die mindestens gleich der Schallgeschwindigkeit ist.

2. Lasergenerator nach Anspruch 1, dadurch gekennzeichnet, daß die Mittel zum Einspeisen des Lasergases in das Rohr weiter eine Kammer (7) aufweisen, die in der ersten Elektrode (5) liegt und mit einer Lasergas-Quelle (8) verbunden sein kann und über die Einspeisekanäle (9, 10) mit dem inneren Volumen des Entladungsrohrs (1) in Verbindung steht.

3. Lasergenerator nach Anspruch 1, dadurch gekennzeichnet, daß er weiter Mittel (13, 14, 15) aufweist, um eine Kühlfüssigkeit in der ersten Elektrode (5) zirkulieren zu lassen.

4. Lasergenerator nach Anspruch 1, dadurch gekennzeichnet, daß er weiter aufweist
— eine dritte Elektrode (50), identisch mit der zweiten Elektrode (49) und in Kontakt mit dem in das Rohr (48) eingeführten Lasergas, wobei die zweite und die dritte Elektrode (49, 50) in einem mittleren Bereich des Rohrs (48) angeordnet sind,
— eine vierte Elektrode (57) gleich der ersten Elektrode (56) und in Kontakt mit dem in das Rohr eingespeisten Lasergas, wobei die erste und die vierte Elektrode (56, 57) je in einem der beiden Endbereiche des Rohrs (48) angeordnet sind und wobei die Einspeisesachsen (69, 70) der Kanäle der vierten Elektrode (57) auf den mittleren Bereich des Rohrs (48) gerichtet sind,
— daß die Mittel, um die erste und die zweite Elektrode auf zwei unterschiedliche elektrische Potentiale zu bringen, die dritte Elektrode (50) auf das gleiche Potential wie das der zweiten Elektrode (49) und die vierte Elektrode (57) auf das gleiche Potential wie das der ersten Elektrode (56) bringen können,
— und daß die Mittel zum Heraussaugen des Lasergases aus dem Rohr eine Pumpe (62) aufweisen, deren Eingang über eine erste Leitung (61) mit einer Öffnung des Rohrs (48) verbunden ist, die zwischen der zweiten und der dritten Elektrode (49, 50) angeordnet ist, wobei der Ausgang der Pumpe (62) über eine zweite bzw. eine dritte Leitung (63, 64) mit der ersten bzw. der vierten Elektrode (56, 57) verbunden ist, um ihre Einspeisekanäle mit Lasergas zu versorgen.

5. Lasergenerator nach Anspruch 4, dadurch gekennzeichnet, daß er weiter zwei Wärmetauscher (65, 66) aufweist, die auf der zweiten bzw. dritten Leitung (63, 64) angeordnet sind.

6. Anwendungsverfahren für den Lasergenerator nach Anspruch 1, dadurch gekennzeichnet, daß es darin besteht, stromaufwärts vor den Einspeisekanälen (9, 10) einen Lasergasdruck aufrechtzuerhalten, der mindestens 50 % höher ist als der Lasergasdruck im Rohr (1), wobei zwei unterschiedliche elektrische Potentiale an die erste und zweite Elektrode (5, 6) angelegt werden, um zwischen diesen Elektroden eine elektrische Entladung in dem in das Rohr (1) eingespeisten Lasergas zu erzeugen.

7

# FIG.1

EP 0 185 226 B1

# FIG.2

# FIG.3

# FIG.4

FIG.5

EP 0 185 226 B1